# EUROPÄISCHE PATENTSCHRIFT

(11) **EP 0 587 689 B1**
(45) Veröffentlichungstag und Bekanntmachung des Hinweises auf die Patenterteilung: **02.04.1997**
(21) Anmeldenummer: 92911780.2
(22) Anmeldetag: 05.06.1992
(51) Int. Cl.: C03B 23/06, C03B 23/07, C03B 23/207, H01J 61/32, H01J 9/24, H01J 9/30

(54) **MEHRFACH GEFALTETE EINROHRGLASGEFÄSSE SOWIE VORRICHTUNG UND VERFAHREN ZU DEREN HERSTELLUNG**
MULTIPLE FOLD, SINGLE TUBE GLASS VESSELS, PROCESS AND DEVICE FOR PRODUCING SAME
RECIPIENT MONOTUBULAIRE EN VERRE A PLIS MULTIPLES, PROCEDE ET DISPOSITIF DE FABRICATION

(30) Priorität: 06.06.1991 DE 4119852; 29.04.1992 DE 4214542
(43) Veröffentlichungstag der Anmeldung: 23.03.1994
(73) Patentinhaber: PROLUX MASCHINENBAU GMBH, 13053 Berlin (DE)
(72) Erfinder: BERNICKE, Erhard, D-1120 Berlin (DE); DAME, Jürgen, D-1141 Berlin (DE); MÜNCHHAUSEN, Rainer, D-1095 Berlin (DE); JUNGCLAUS, Lothar, D-1142 Berlin (DE)
(74) Vertreter: Ninnemann, Detlef, Dipl.-Ing.
(86) Internationale Anmeldenummer: DE9200484
(87) Internationale Veröffentlichungsnummer: WO9221626

(56) Entgegenhaltungen:
- EP-A- 0 061 758
- EP-A- 0 246 548
- DE-A- 3 044 058
- US-A- 4 288 239

## Beschreibung

Die Erfindung betrifft mehrfach gefaltete Einrohrglasgefäße nach dem Oberbegriff des Anspruchs 1, ein Verfahren zur Herstellung mehrfach gefalteter Einrohrglasgefäße und eine Vorrichtung zur Durchführung des Verfahrens.

Kompaktlampen werden in großem Umfang zur elektrischen Lichterzeugung eingesetzt. Im Vergleich zu Glühlampen zeichnen sie sich durch eine höhere Lichtausbeute sowie eine längere Lebensdauer aus. Die Lichterzeugung bei Kompaktlampen erfolgt über den Prozess einer Gasentladung in einem gefalteten Entladungsgefäß.

Bei den bekannten Kompaktlampen wird der Entladungsweg üblicherweise durch eine Aneinanderreihung von zwei oder mehr U-Rohren realisiert, wobei zwei U-Rohre durch eine lochartige Verbindungsstelle an je einem ihrer Schenkel miteinander verbunden werden (hot-kiss-Verfahren). Die Nachteile einer solchen Technik sind zahlreich.

Bereits die Herstellung der U-Rohre selbst ist mit Problemen verbunden. So werden U-Rohre üblicherweise durch Biegen beidseitig offener, stabförmiger Glasrohre hergestellt. Dies führt notwendigerweise zu einer ungleichmäßigen Wanddicke der U-Rohre in den Bögen. Insbesondere durch die ungleichmäßige Verteilung des Glasmaterials in den Bögen treten glastechnische Spannungen auf, die in den nachfolgenden Bearbeitungsschritten eine aufwendige glastechnische Behandlung bedingen und eine Hauptursache für Lampenausfälle darstellen.

Weiter tritt an den lochartigen Verbindungsstellen eine rapide Änderung der elektrischen Feldstärke der positiven Säule der Gasentladung auf. Für einen hohen Wirkungsgrad einer Kompaktlampe ist jedoch ein über die ganze Länge der positiven Säule gleichbleibend stetiger Verlauf der elektrischen Feldstärke erforderlich. Die Änderung der elektrischen Feldstärke an den lochartigen Verbindungsstellen führt daher zu einer Minderung der Lichtausbeute einer Kompaktlampe.

Aus der DE-A-30 44 058 ist eine elektrische Entladungslampe bekannt, die ein mehrfach gefaltetes Entladungsrohr aufweist. Die U-förmigen Abschnitte des Entladungsrohres sind durch Biegen stabförmiger Glasrohre entstanden, so daß die Wanddicken des Entladungsrohres in diesen Abschnitten naturgemäß nicht konstant sind. Zwar wird zum Ausgleich von Deformationen vorgeschlagen, in das Entladungsrohr einen unter Druck stehenden Strom aus inertem Gas einzuführen, jedoch kann dadurch höchstens der Durchmesser des Entladungsrohrs, nicht jedoch die ungleichmäßige Glasverteilung in den Bögen korrigiert werden.

Aus der EP-A1-0 246 548 ist ein Verfahren zur Herstellung eines ein- oder mehrfach gebogenen rohrförmigen Entladungsgefäßes aus Glas mit mehreren geraden Rohrabschnitten und 180°-Biegungen bekannt, bei dem vor dem jeweiligen Biegevorgang das Glasrohr in dem für den Biegevorgang bis zum Erweichen erwärmten Rohrabschnitt gestaucht wird. Dazu werden die seitlich vor dem erwärmten Abschnitt sich erstreckenden Rohrabschnitte in Richtung des erwärmten Rohrabschnittes axial zusammengeführt. Durch die Stauchung des Rohres wird die Rohrwand an den Stellen, an denen eine 180°-Biegung vorgesehen ist, verstärkt. Damit wird verhindert, daß nach dem Biegevorgang die Wand des Glasrohres an der äußeren Mantelfläche der 180°-Biegungen eine gewisse Mindestwanddicke unterschreitet. Jedoch weist das in dieser Druckschrift beschriebene Einrohrglasgefäß in den Innenkurven der U-förmigen Abschnitte eine wesentlich größere Wanddicke auf als in den Außenkurven.

In der GB-A-668 259 wird ein Verfahren zur Herstellung eines U-Rohres beschrieben, bei dem zwei parallel zueinander angeordnete Glasrohre an ihren unteren, sich gegenüberliegenden Rohrenden erwärmt, die erwärmten Rohrenden an ihren gegenüberstehenden Seiten mechanisch verbunden und an ihren Innenseiten entlang einer Strecke, die etwa dem zweifachen Glasrohrdurchmesser entspricht, längs aufgetrennt werden. Durch anschließendes Erwärmen der Rohrenden mittels seitlich angeordneter Brenner entsteht ein an seiner unteren Seite ovaloffenes Glasgefäß.

Die im Querschnitt ovale Öffnung des Glasgefäß wird dadurch geschlossen, daß zwei sich gegenüberstehende, auf beiden Seiten des Glasgefäßes angeordnete Brenner das Glas senkrecht zur Längsachse der Glasrohre entlang einer schmalen, horizontalen Linie von außen bis zu dessen Schmelztemperatur erwärmen. Dabei verläuft die horizontale Linie etwa in einem vertikalen Abstand zur Öffnung des Glasgefäßes, der dem Glasrohrdurchmesser entspricht. Mit einer Schere wird das Glas anschließend unterhalb dieser horizontalen Linie abgeschnitten und dabei das Glasgefäß unter Entstehung einer Naht geschlossen. Alternativ wird das Glas unterhalb der horizontalen Linie allein durch die seitlichen Brenner abgetrennt, wobei sich das abzutrennende Glas in einem Tropfen sammelt und zu Boden fällt. In diesem Fall wird das Glasgefäß durch das Abtropfen des Glasrestes geschlossen. Anschließend wird das geschlossene Gefäß in einer Formtasche durch Blasen ausgeformt.

Nachteilig bei diesem Verfahren ist insbesondere das Entstehen eines Glasrestes und die damit verbundene Verkürzung der Glasrohre. In diesem Zusammenhang ist es unvorteilhaft, daß bei dem bekannten Verfahren die gegenüberstehenden Glasrohre entlang einer Strecke, die in etwa dem zweifachen Glasrohrdurchmesser entspricht, längs aufgetrennt werden müssen.

Es wird darauf hingewiesen, daß es nicht möglich ist, durch mehrfache Anwendung des bekannten Verfahrens ein derart gefaltetes Einrohrglasgefäß herzustellen, daß die beiden offenen Rohrenden nebeneinander liegen. Durch mehrfache Anwendung des bekannten Verfahrens ist es lediglich möglich, ein längliches, entlang einer Geraden angeordnetes gefaltetes Einrohrglasgefäß herzustellen.

Dies hängt mit dem Umstand zusammen, daß bei dem bekannten Verfahren jeweils ein Glasrest durch seitlich angeordnete Brenner abgetrennt wird. Es müssen also in horizontaler Orientierung zu beiden Seiten der ovaloffenen Gefäße Brenner angeordnet sein. Dies ist aber grundsätzlich nicht möglich, falls die einzelnen Abschnitte eines Einrohrglasgefäßes hin- und hergeführt werden, wie es notwendig ist, wenn die beiden offenen Rohrenden eines Einrohrglasgefäßes nebeneinander liegen. Dann verdecken nämlich bereits vorhandene Glasrohrteile zumindest auf einer Seite eines ovaloffenen Gefäßes den zu bearbeitenden Glasbereich, so daß die seitlich angeordneten Brenner den entsprechenden Glasbereich nicht erwärmen können und das bekannte Verfahren somit versagt.

Ausgehend von diesem Stand der Technik liegt der Erfindung die Aufgabe zugrunde, ein mehrfach gefaltetes Einrohrglasgefäß der eingangs genannten Gattung, das sich durch im wesentlichen konstante Wanddicken und einen im wesentlichen konstanten Innendurchmesser auszeichnet, sowie ein Verfahren und eine Vorrichtung zu dessen Herstellung zu schaffen.

Erfindungsgemäß wird diese Aufgabe durch die Gegenstände der Ansprüche 1, 5 und 11 gelöst.

Das erfindungsgemäße mehrfach gefaltete Einrohrglasgefäß zeichnet sich durch im wesentlichen konstante Wanddicken und einen im wesentlichen konstanten Innendurchmesser, inbesondere in den U-förmigen Abschnitten, aus. Derartige Einrohrglasgefäße sind insbesondere als Entladungsgefäße für Kompaktlampen geeignet. Aufgrund des konstanten Innendurchmessers wird ein gleichmäßiger Querschnitt des Entladungsraumes und damit eine hohe Lichtausbeute gewährleistet.

Die konstanten Wanddicken bewirken ein besonders robustes Entladungsgefäß, welches nur geringe Eigenspannungen im Glaskörper aufweist und eine lange Lebensdauer besitzt. Auch kann aufgrund der konstanten Wanddicken insgesamt mit dünnwandigeren Glasrohren gearbeitet werden kann. Dies führt zu einer erheblichen Materialersparniss.

In einer vorteilhaften Ausgestaltung der Erfindung beträgt der Abstand zwischen benachbarten Teilstücken des Einrohrglasgefäßes 1,6 bis 3 mm, insbesondere 2 mm. Der Innendurchmesser der Einrohrglasgefäße liegt vorzugsweise bei 5 bis 15 mm, insbesondere 12 mm. Vorteilhafte Wanddicken des Einrohrglasgefäßes liegen zwischen 1 und 2 mm.

Beim erfindungsgemäßen Verfahren werden in einem ersten Verfahrensabschnitt gleichzeitig jeweils zwei im Abstand parallel stehend angeordnete, beidseitig offene Glasrohre an ihren unteren, sich gegenüberliegenden Rohrenden erwärmt. Es werden die erwärmten Rohrenden mechanisch an ihren gegenüberstehenden Seiten verbunden und gleichzeitig an ihren Innenseiten unterhalb der dabei entstandenen Verbindungsstelle entlang einer Strecke, die im wesentlichen gleich dem Durchmesser der Glasrohre ist, längs aufgetrennt. Durch gezielte Befeuerung von unten werden die entstandenen Schnittstellen der beiden Glasrohre auseinandergetrieben und die Verbindungsstelle der beiden Rohrenden dabei verschweist.

Anschließend werden die im Querschnitt ovalen Öffnungen der entstandenen ovaloffenen Gefäße jeweils unter Einwirkung einer von unten in die Öffnung gerichteten und im wesentlichen die gesamte Öffnung erfassenden Befeuerung zugeschmolzen und es wird beim Zuschmelzen der ovalen Öffnung die Befeuerung zunehmend auf die Mitte des entstehenden U-förmigen Abschnittes fokussiert. Die entstandenen U-förmigen Abschnitte werden durch Blasen in einer geschlossenen Formtasche ausgeformt. Danach werden in einem zweiten Verfahrensabschnitt alle Glasrohre bzw. Glasrohrpaare gleichzeitig um 180° gewendet und in oben beschriebener Weise untereinander verbunden und ausgeformt, wobei zwei benachbarte Rohrenden offen bleiben.

Das Zuschmelzen der ovaloffenen Öffnung eines ovaloffenen Gefäßes erfolgt dabei ohne Abtropfen eines Glastropfens oder die Entstehung anderer Glasreste. Auch erfolgt das Zuschmelzen ohne Zuhilfenahme irgendwelcher mechanischer Werkzeuge oder Geräte.

In einer bevorzugten Ausführungsform der Erfindung wird ein mehrfach gefaltetes Einrohrglasgefäß mit vier geraden Teilstücken unter Verwendung von vier beidseitig offenen Glasrohren hergestellt. Dabei werden zuerst zwei Glasrohre an ihrem unteren Ende zu einem U-förmigen Abschnitt verbunden, danach die unbearbeiteten Glasrohre sowie das entstandene Glasrohrpaar um 180° gewendet und anschließend gleichzeitig jeweils ein gerades Teilstück des zuvor hergestellten Glasrohrpaares mit einem bisher unbearbeiteten Glasrohr verbunden.

Besonders vorteilhaft ist es, wenn die Erwärmung der Rohrenden in einem Ausmaße erfolgt, daß das Glasmaterial einen verformbaren, jedoch noch nicht plastischen Zustand einnimmt. Das Verbinden und Auftrennen der gegenüberstehenden Seiten je zweier Rohrenden kann gleichzeitig oder auch nacheinander ausgeführt werden.

Das Auftrennen der gegenüberliegenden Seiten je zweier Rohrenden erfolgt vorzugsweise durch Schneiden.

Damit die beiden offenen Rohrenden des Einrohrglasgefäßes benachbart liegen, werden die einzelnen Teilstücke des Einrohrglasgefäßes derart hin- und hergeführt, daß das erste und das letzte Teilstück des Einrohrglasgefäßes sich parallel nebeneinander befinden.

Das Zuschmelzen einer ovalen Öffnung eines ovaloffenen Gefäßes erfolgt bevorzugt mittels mittels Mehrpunktflammen. Dadurch wird eine besonders exakte Flammenführung ermöglicht.

Es liegt im Rahmen der Erfindung, den U-förmigen Abschnitten der je zwei verbundenen Glasrohre entsprechend der Form der geschlossenen Formtaschen beim Blasen eine runde, eine rechteckige, eine zackenförmige oder eine gewellte Form zu geben.

In einer bevorzugten Ausführungsform werden die beiden Glasrohre, deren Enden offen bleiben etwas länger gewählt als die üblichen Glasrohre. Für diesen Fall werden die Öffnungen der zu bearbeitenden Rohrenden mit Vorteil jeweils auf gleiche Höhe geschoben. Bei Verwendung der Einrohrglasgefäße als Entladungsgefäße für Kompaktlampen können in den überstehenden Glasrohrenden beispielsweise die Elektroden angeordnet werden.

Die Vorrichtung zur Durchführung des Verfahrens besteht aus einem getakteten Automaten, an dem in gleichen Abständen Halte- und Wendezangen zur Aufnahme der zu bearbeitenden Glasrohre angebracht sind. Entsprechend den einzelnen Positionen des getakteten Automaten sind hintereinander und ortsfest eine Zuführvorrichtung, eine Höhenabrichtvorrichtung, Vorwärmbrenner, eine Schneid- und Quetschvorrichtung, Verschmelzbrenner unterschiedlicher Breite und eine Blas- und Formvorrichtung angeordnet. Weiter befindet sich dahinter und hintereinander eine Drehvorrichtung zum Wenden der Glasrohre sowie wiederum eine Höhenabrichtvorrichtung, Vorwärmbrenner, eine Schneid- und Quetschvorrichtung, Verschmelzbrenner unterschiedlicher Breite, eine Blas- und Formvorrichtung und eine Entnahmevorrichtung.

In einer bevorzugten Ausführungsform der Vorrichtung ist der getaktete Automat in der Draufsicht im wesentlichen kreisförmig. Entsprechend sind die einzelnen Bearbeitungsstationen im wesentlichen entlang eines Kreises angeordnet. Dadurch wird ein kontinuierlicher Arbeitsablauf gewährleistet. Es liegt ebenfalls im Rahmen der Erfindung, daß der getaktete Automat in der Draufsicht im wesentlichen länglich ist und dementsprechend die einzelnen Bearbeitungsstationen im wesentlichen entlang einer Geraden angeordnet sind. Mit Vorteil besitzt der getaktete Automat in beiden Fällen einen pneumatischen Antrieb.

In einer vorteilhaften Ausgestaltung der Vorrichtung sind zwischen der Höhenabrichtvorrichtung und den Vorwärmbrennern eine Drehvorrichtung und eine Positionsrichtvorrichtung für die zu bearbeitenden Glasrohre angeordnet. Dadurch wird ermöglicht, daß die Glasrohre, nachdem sie durch die Halte- und Wendezangen aufgenommen werden, in eine geeignete Position gedreht und dort die Glasrohrabschnitte paarweise in unterschiedlich definierte Höhen abgerichtet werden, so daß eine erleichterte Bearbeitung möglich wird.

Die Zuführvorrichtung für die zu bearbeitenden Glasrohre besteht aus einer Förderkette und einem pneumatisch getakteten Antrieb, wobei an der Förderkette Magazine zur Aufnahme von mindestens vier beidseitig offenen Glasrohren angeordnet sind.

Mit Vorteil weist jede Schneid- und Quetschvorrichtung mindestens zwei sich jeweils gegenüberstehende Schneidmesser auf. Ein scherenartig angeordnetes Messerpaar wird jeweils von unten in zwei offene Glasrohrabschnitte eingeführt und trennt diese mit einer definierten Schnittlänge auf und verbindet sie gleichzeitig.

Mit Vorteil sind die Verschmelzbrenner Mehrlochbrenner. In Abhängigkeit von dem jeweiligen Verfahrensschritt weisen die Mehrlochbrenner unterschiedliche Abmessungen auf.

Jede Blas- und Formvorrichtung weist zwei abdichtende Blasdüsen und mindestens eine Formtasche auf. Durch die abdichtenden Blasdüsen wird jeweils Gas in zwei Rohrabschnitte geblasen, so daß der entsprechende Glasrohrabschnitt entsprechend der Form der Formtasche ausgeformt wird. Als Gas wird dabei insbesondere Stickstoff verwendet.

In einer günstigen Ausführungsform weist die eine Blas- und Formvorrichtung n/2 Formtaschen und die andere Blas- und Formvorrichtung (n/2-1) Formtaschen auf, wenn n gleich der Anzahl der zu bearbeitenden Glasrohre ist. Bei Herstellung eines Einrohrglasgefäßes mit vier geraden Teilstücken weist beispielsweise die zuerst verwendete Blas- und Formvorrichtung eine Formtasche und die danach verwendete Blas- und Formvorrichtung zwei Formtaschen auf.

Die Erfindung soll nachfolgend unter Bezugnahme auf die Zeichnungen an einem Ausführungsbeispiel näher erläutert werden.

Es zeigen
- Fig. 1: eine schematische Draufsicht auf eine erfindungsgemäße Vorrichtung,
- Fig. 2: eine Seitenansicht einer Zuführvorrichtung zum Zuführen von Glasrohren,
- Fig. 3: eine Draufsicht auf eine Halte- und Wendezange zur Aufnahme von vier Glsrohren,
- Fig. 4: eine schematische Darstellung der Halte- und Wendezange gemäß Fig. 3 mit vier aufgenommenen Glasrohren,
- Fig. 5: eine Schnittansicht einer Höhenabrichtvorrichtung,
- Fig. 6: eine Schnittansicht einer Drehvorrichtung,
- Fig. 7: eine Schnittansicht einer Positionsrichtvorrichtung,
- Fig. 8: eine Schnittansicht einer Schneid- und Quetschvorrichtung,
- Fig. 9: eine Schnittansicht einer Blas- und Formvorrichtung,
- Fig. 10: eine schematische Draufsicht auf die geschlossene Formtasche einer Blas- und Formvorrichtung,
- Fig. 11: eine schematische Draufsicht auf zwei geschlossene Formtaschen einer Blas- und Formvorrichtung zum Verbinden der um 180° gewendeten Glasrohre,
- Fig. 12: eine schematische Draufsicht auf die ovale Öffnung eines ovaloffenen Glasgefäßes und einen Verschmelzbrenner für drei Arbeitspositionen,
- Fig. 13: eine schematische Schnittansicht einer geschlossenen Formtasche mit einem ausgeformten U-förmigen Abschnitt,
- Fig. 14: eine schematische Darstellung des Andrückens und Auftrennens der um 180° gewendeten Glasrohre,
- Fig. 15: eine Draufsicht auf die schematische Anordnung zweier ovaler Öffnungen und zweier Verschmelzbrenner und
- Fig. 16: ein erfindungsgemäßes mehrfach gefaltetes Einrohrglasgefäß mit vier geraden Teilstücken.

Das Ausführungsbeispiel der Erfindung beschreibt die Herstellung von mehrfach gefalteten Einrohrglasgefäßen mit vier geraden Teilstücken.

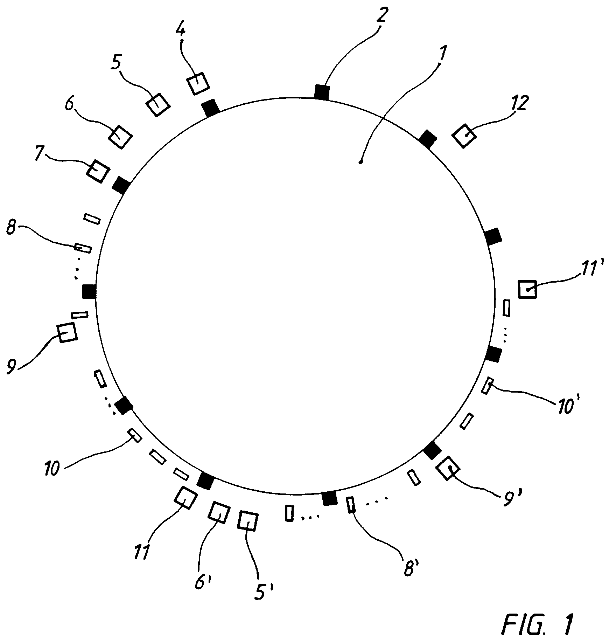

Fig. 1 zeigt schematisch eine Vorrichtung zur Herstellung erfindungsgemäßer Einrohrglasgefäße. Die dargestellte Vorrichtung besteht aus einem getakteten Automaten 1 mit kreisförmigem Querschnitt, der als Rundläufer ausgebildet ist. Der Automat 1 besitzt einen pneumatischen Antrieb. Am Außenrand des Automaten 1 sind in gleichen Abständen Halte- und Wendezangen 2 zur Aufnahme der zu bearbeitenden Glasrohre 3 angeordnet. Jede Halte- und Wendezange 2 umfaßt vier beidseitig offene Glasrohre 30, 31, 32, 33. Die vier Glasrohre 30, 31, 32, 33 sind dabei entsprechend den vier Ecken eines Quadrats angeordnet.

Entlang des Umfangs des Automaten 1 sind hintereinander entsprechend den einzelnen Taktpositionen des Automaten 1 hintereinander und ortsfest eine Zuführvorrichtung 4, eine Höhenabrichtvorrichtung 5, eine Drehvorrichtung 6, eine Positionsrichtvorrichtung 7, Vorwärmbrenner 8, eine Schneid- und Quetschvorrichtung 9, Verschmelzbrenner 10 unterschiedlicher Breite, eine Blas- und Formvorrichtung 11, weiter eine Drehvorrichtung 6', eine Höhenabrichtvorrichtung 5', Vorwärmbrenner 8', eine Schneid- und Quetschvorrichtung 9', Verschmelzbrenner 10' unterschiedlicher Breite, eine Blas- und Formvorrichtung 11' und eine Entnahmevorrichtung 12 angeordnet.

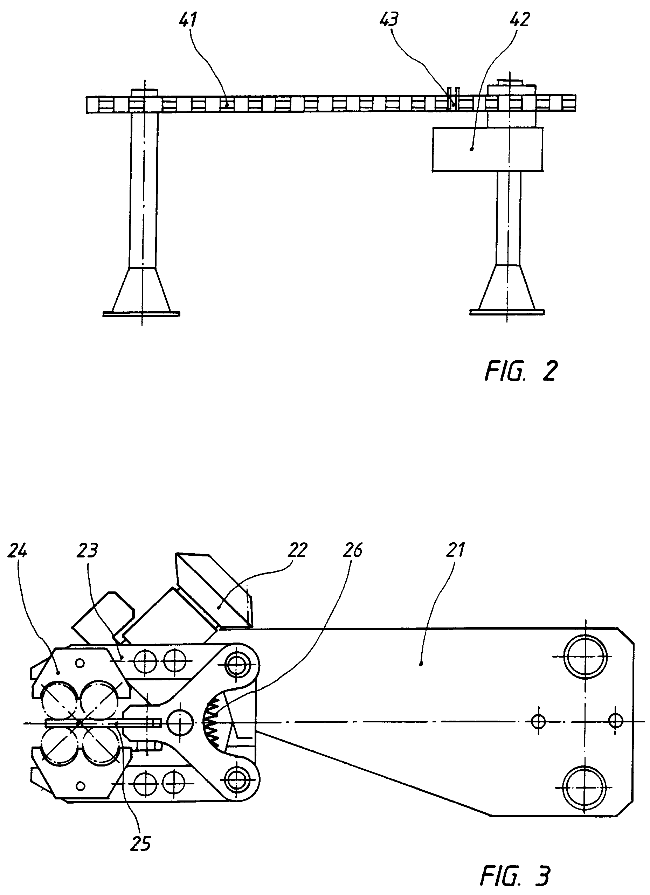

Wie in Fig. 2 dargestellt, besteht die Zuführvorrichtung 4 für die zu bearbeitenden Glasrohre 3 aus einer Förderkette 41 und einem pneumatisch getakteten Antrieb 42. An der Förderkette sind Magazine 43 montiert, die gleichzeitig vier beidseitig offene Glasrohre 30, 31, 32, 33 in orientierter Lage aufnehmen.

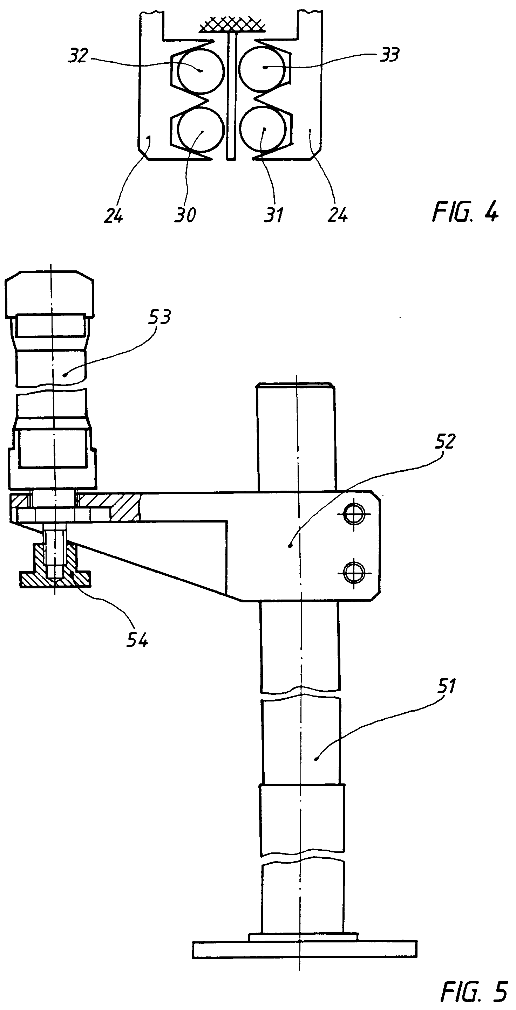

In Fig. 3 ist eine Halte- und Wendezange 2 zur Aufnahme von vier Glasrohren 30, 31, 32, 33 dargestellt. Die Halte- und Wendezange 2 besteht aus einem Grundkörper 21, einem Wendemechanismus 22, zwei Zangenschenkeln 23, einem Prismenpaar 24, einem Mittelsteg 25 und einer Feder 26. Zwischen den beiden Zangenschenkeln 23 sind die Glasrohre 3 angeordnet. Bei Wenden der Halte- und Wendezange 2 um 180° bleibt der Bearbeitungsmittelpunkt für die Bearbeitung der vier Glasrohre 3 erhalten. Dadurch wird gewährleistet, daß jeweils beide Rohrenden der vier Glasrohre 3 in der stets geschlossenen Halte- und Wendezange 2 bearbeitet werden können. Fig. 4 zeigt schematisch die Anordnung der vier Glasrohre 30, 31, 32, 33 in der Halte- und Wendezange 2.

Die Höhenabrichtvorrichtung 5 (Fig. 5) besteht aus einer Säule 51, an der über einem verstellbaren Ausleger 52 ein pneumatischer Arbeitszylinder 53 mit einem Andrückteller 54 befestigt ist. Durch den Andrückteller 54 werden die vier Glasrohre 3 gleichzeitig auf eine definierte Höhe abgerichtet. Dabei kann die Höhenabrichtung der vier Glasrohre 3 von unten nach oben oder von oben nach unten erfolgen.

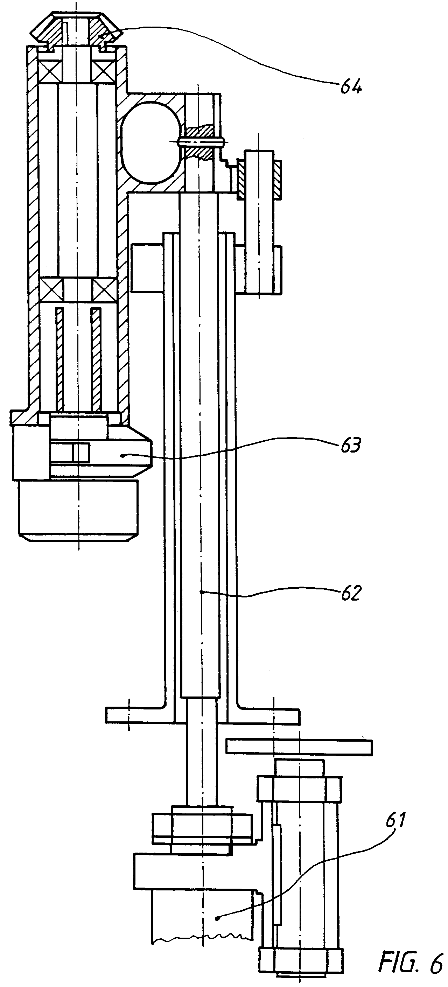

Die in Fig. 6 dargestellte Drehvorrichtung 6 dient dazu, die Halte- und Wendezange 2 über den Wendemechanismus 22 um 180° zu wenden sowie gegebenenfalls gleichzeitig um 90° um die eigene Achse zu drehen. Die Drehvorrichtung 6 weist einen Arbeitszylinder 61 mit einem Hubmechanismus 62 auf. Mit dem Hubmechanismus 62 ist eine pneumatische Drehvorrichtung 63 und ein Kegelrad 64 verbunden, wobei das Kegelrad 64 den Wendemechanismus 22 antreibt.

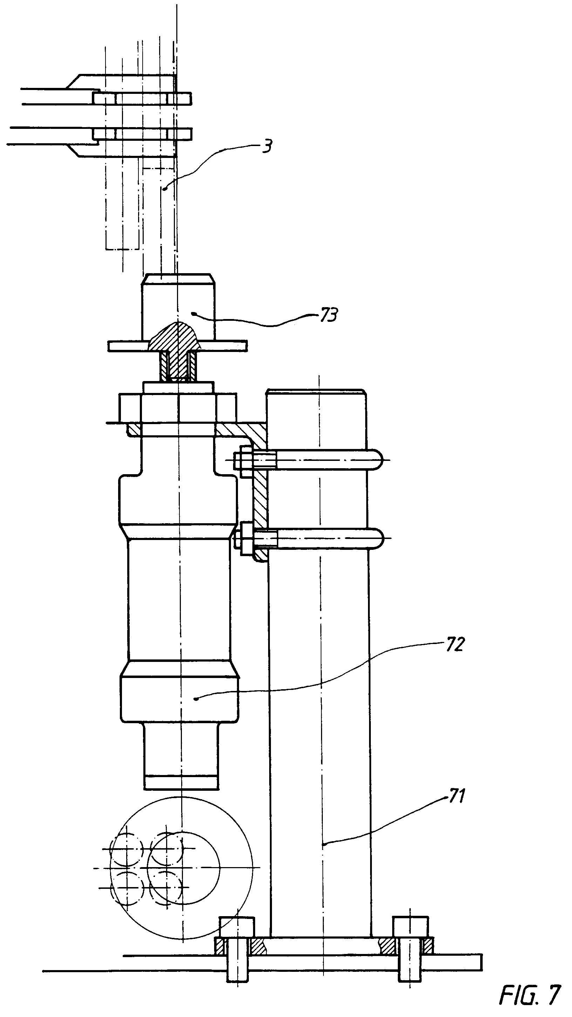

Eine Positionsrichtvorrichtung 7 (Fig. 7) besteht aus einer Säule 71, einem pneumatischen Arbeitszylinder 72 und einem Positionierkopf 73. Mit Hilfe des Positionierkopfes werden jeweils zwei Glasrohre 30, 31 bzw. 32, 33 in eine unterschiedliche Höhe abgerichtet. Beispielsweise werden die beiden sich näher an dem Automaten 1 befindlichen Glasrohre 32, 33 etwas nach oben verschoben, so daß die beiden Glasrohre 30, 31 nach unten hervorstehen und somit besonders leicht bearbeitet werden können, ohne daß die beiden Glasrohre 32, 33 dabei stören.

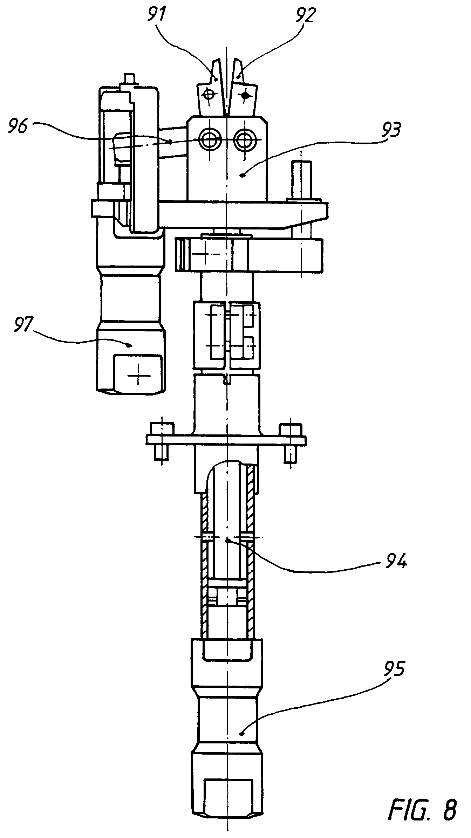

Eine Schneid- und Quetschvorrichtung 9 ist in Fig. 8 dargestellt. An ihrem oberen Ende befinden sich zwei scherenartig angeordnete Messer 91, 92. Die Messer 91, 92 sind in einer Messeraufnahme 93 angeordnet, die auf einer mit einem pneumatischen Hubzylinder 95 verbundenen Hubstange 94 befestigt ist. Die Messer 91, 92 werden mittels eines Antriebsgelenkes 96 eines pneumatischen Antriebszylinders 97 betätigt. Es ist ebenfalls möglich, in die Messeraufnahme 93 statt zwei Messer 91, 92 vier Messer 91, 92, 98, 99 einzusetzen, wobei die vier Messer 91, 92, 98, 99 entsprechend den Ecken eines Rechteckes angeordnet sind. Ein scherenartig angeordnetes Messerpaar 91, 92 bzw. 98, 99 wird jeweils von unten in Zwei offene Glasrohre 3 eingeführt und trennt diese mit einer definierten Schnittlänge auf.

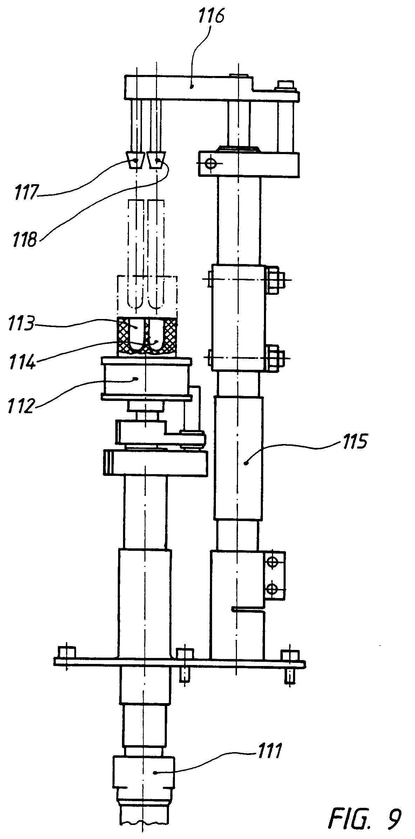

Eine Blas- und Formvorrichtung 11 besteht gemäß Figur 9 aus Zwei zusammenwirkenden Elementen. Das eine Element besteht aus einem auf einem pneumatischen Hubzylinder 111 angeordneten federnden Aufnahmehalter 112, der zwei geschlossene Formtaschen 113, 114 hält. Es kann auch vorgesehen sein, daß lediglich eine Formtasche 113 vorhanden ist. Das andere Element weist im wesentlichen einen pneumatischen Hubzylinder 115, einen Ausleger 116 und zwei federnde, abdichtende Blasdüsen 117, 118 auf.

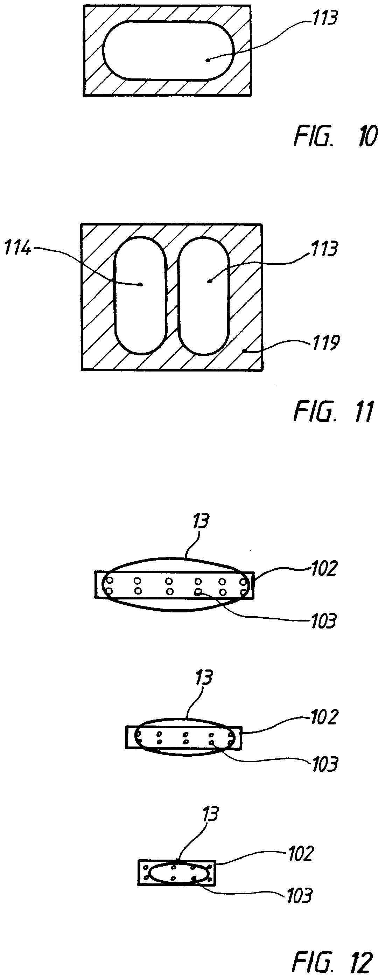

Figur 10 zeigt eine Draufsicht auf eine geschlossene Formtasche 113 einer Blas- und Formvorrichtung 11 und Figur 11 eine Draufsicht auf zwei geschlossenen Formtaschen 113, 114 einer Blas- und Formvorrichtung 11. Die beiden geschlossenen Formtaschen 113, 114 bilden dabei eine Doppelformtasche 119.

Die Entnahmevorrichtung 12 weist insbesondere einen nicht dargestellten Zangenöffner mit einem Druckstift auf. Zum Öffnen einer Halte- und Wendezange 2 wird der Druckstift kraftschlüssig gegen die Zangenschenkel 23 gedrückt und öffnet auf diese Weise das Prismenpaar 24.

Als Vorwärmbrenner 8 dienen zum einen unterhalb der Halte- und Wendezangen 2 angeordnete Brenner 81 sowie seitlich angeordnete Seitenfeuer 82. Als Verschmelzbrenner 10 werden schmale und stark fokussierte Innenausformbrenner 101 sowie mehrere Anformbrenner unterschiedlicher Breite 102 verwendet. Die Innenausformbrenner 101 sowie die Anformbrenner 102 sind jeweils unterhalb der Halte- und Wendezangen angeordnet. Als Brenner 101, 102 werden Mehrlochbrenner verwendet.

Die beschriebenen Einzelvorrichtungen stellen Bearbeitungsstationen einer Arbeitsfolge dar, die die über die Halte- und Wendezangen 2 mit dem Automaten 1 verbundenen Glasrohre 3 im Takt des Automaten 1 durchlaufen.

Es werden vier beidseitig offene Glasrohre 30, 31, 32, 33 in das Magazin 43 der Zuführvorrichtung 4 eingegeben und von dieser an eine am Automaten 1 befestigte Halte- und Wendezange 2 übergeben. Dabei sind die beiden dem Automaten 1 zugewandten Glasrohre 32, 33 geringfügig länger als die Glasrohre 30, 31. Die Abstände der parallel zueinander angeordneten Glasrohre 3 entsprechen bereits denen des herzustellenden Einrohrglasgefäßes.

Die Glasrohre 3 werden mittels der Höhenabrichtvorrichtung 5 von` oben auf eine gemeinsame Höhe abgerichtet und anschließend mittels der Drehvorrichtung 6 um 180° gewendet. Weiter werden die Glasrohre 32, 33 mittels der Positionsrichtvorrichtung 7 in der Höhe nach oben versetzt. Die beiden Glasrohre 32, 33 bleiben vorerst in Warteposition, während die nun nach unten hervorstehenden und daher leicht zu bearbeitenden Glasrohre 30, 31 miteinander verbunden werden.

Dazu werden die beiden Glasrohre 30, 31 durch die Brenner 81 von unten vorgewärmt und anschließend mittels der seitlich angeordneten Seitenfeuern 82 an ihren unteren, sich gegenüberliegenden Rohrenden erwärmt.

In die erwärmten Glasrohre 30, 31 werden von unten die scherenartig angeordneten Messer 91, 92 der Scheid- und Quetschvorrichtung 9 eingeführt. Die Länge der Messer entspricht dabei im wesentlichen dem Durchmesser der Glasrohre 3. Beim nachfolgenden Zusammendrücken der Messer 91, 92 werden die gegenüberliegenden Seiten der Glasrohre 30, 31 an ihren Innenseiten verbunden und gleichzeitig unterhalb der dabei entstandenen Verbindungsstelle entlang einer Strecke, die im wesentlichen gleich dem Durchmesser der Glasrohre 3 ist, längs aufgetrennt.

Weiter werden die entstandenen Schnittkanten der Glasrohre 30, 31 durch gezielte Befeuerung von unten mittels der Innenausformbrenner 101 auseinandergetrieben, wobei die Verbindungsstelle der Glasrohre 30, 31 verschmolzen wird. Die beiden Glasrohre 30, 31 werden zu einem ovaloffenen Gefäß verbunden.

Mittels unterschiedlicher Anformbrenner 102 wird die ovale Öffnung 13 des ovaloffenen Gefäßes anschließend geschlossen. Die Anformbrenner 102 sind dabei unterhalb der ovaloffenen Öffnung 13 angeordnet und die Befeuerung ist in die ovalen Öffnungen 13 hinein gerichtet. Mit Zuschelzen der ovalen Öffnung 13 wird die Befeuerung zunehmend auf die Mitte des entstehenden U-förmigen Abschnittes fokussiert. Das Zuschmelzen der Öffnung 13 erfolgt allein durch die Erhitzung des Glases und ohne Zuhilfenahme irgendwelcher mechanischer Hilfen. Auch entsteht beim Zuschmelzen der Öffnung kein Glastropfen oder ein sonstiger Glasrest. Mit Zuschmelzen der ovalen Öffnung 13 entsteht eine geschlossene Verbindung zwischen den Glasrohren 30, 31.

Figur 12 zeigt schematisch in der Draufsicht die ovale Öffnung 13 eines ovaloffenen Gefäßes und einen Anformbrenner 102 mit Löchern 103 für drei verschiedene Arbeitspositionen. Die ovale Öffnung 13 wird beim Zuschmelzen immer kleiner und der jeweilige Anformbrenner 102 entsprechend immer schmaler, wobei der jeweilige Anformbrenner 102 auf die ovale Öffnung gerichtet bleibt.

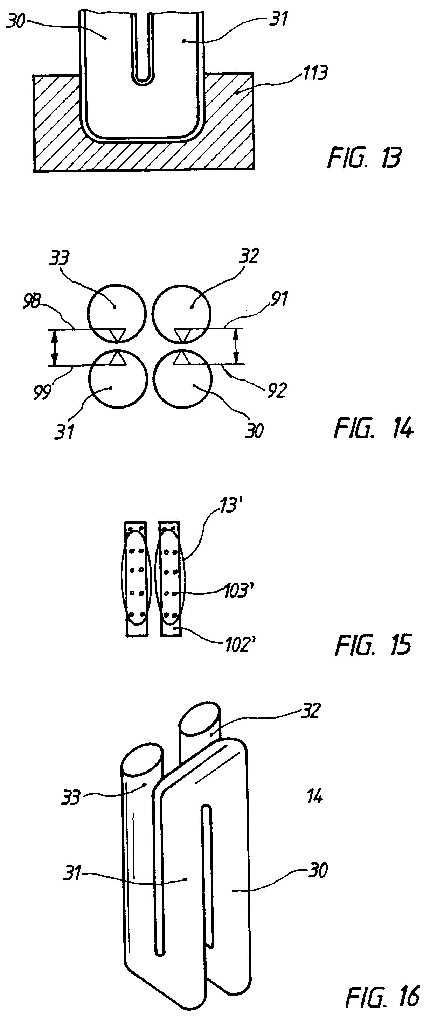

Mittels der Blas- und Formvorrichtung 11 wird der entstandene U-förmige Abschnitt durch Blasen in der Formtasche 113 ausgeformt. Dazu werden die abdichtenden Blasdüsen 117, 118 an die oberen Öffnungen der Glasrohre 30, 31 angesetzt und der U-förmige Abschnitt mit Stickstoff ausgeblasen. Der ausgeblasenen U-förmige Abschnitt ist schematisch in Fig. 13 dargestellt.

Mittels der Drehvorrichtung 6' wird die Halte- und Wendezange 2 anschließend um 180° gewendet sowie um 90° gedreht, so daß das U-förmige Rohr mit den Öffnungen nach unten zeigt. Durch die Höhenabrichtvorrichtung 5' werden die vier Glasrohre 30, 31, 32, 33 in der Höhe ausgerichtet, so daß die nach unten weisenden offenen Rohrenden in einer Ebene liegen.

Im Anschluß daran werden die vier unteren Rohrenden analog dem zuvor beschriebenen Arbeitschritten mittels Seitenfeuer 82' erwärmt und mittels der Messer 91, 92, 98, 99 der Scheid- und Quetschvorrichtung 9' werden jeweils zwei Rohrenden an ihren Innenseiten verbunden und unterhalb der entstandenen Verbindungsstelle längs aufgetrennt. Dabei wird jeweils ein bisher unbehandeltes Glasrohr 32, 33 mit einem Teilstück des zuvor hergestellten Glasrohrpaares verbunden. In Figur 14 ist das Andrücken und Auftrennen der um 180° gewendeten Glasrohre schematisch dargestellt.

In vorbeschriebener Weise werden die zwei entstandenen ovalen Öffnungen 13' mittels Innenausformbrennern 101' und unterschiedlichen Anformbrennern 102' geschlossen. Dabei sind die jeweiligen Brenner entsprechend der zwei zu bearbeitenden ovalen Öffnungen 13' jeweils als Duplexbrenner ausgestaltet. Figur 15 zeigt schematisch die Anordnung zweier ovaler Öffnungen 13' mit Anformbrennern 102'. Anschließend werden die beiden entstandenen U-förmigen Abschnitte in einer Doppelformtasche 119 der Form- und Blasvorrichtung 11' ausgeblasen.

Nach Abkühlen des entstandenen Einrohrglasgefäßes wird dieses mittels der Entnahmevorrichtung 12 der Halte- und Wendezange 2 entnommen.

Das entstandene mehrfach gefaltete Einrohrglasgefäß 14 (Fig. 16) weist einen im wesentlichen konstanten Innendurchmesser sowie im wesentlichen konstante Wanddicken, insbesondere in den U-förmigen Abschnitten, auf.

In einem anderen Ausführungsbeispiel ist der getaktete Automat 1 nicht als Rundläufer, sondern als Linearmaschine ausgelegt. Entsprechend sind die einzelnen Bearbeitungsstationen im wesentlichen entlang einer Geraden angeordnet. Eine Halte- und Wendezange 2 bewegt sich linear entlang der Bearbeitungsstationen und wird von der letzten Bearbeitungsstation zur ersten Bearbeitungsstation zurückgeführt.

## Patentansprüche

1. Mehrfach gefaltetes Einrohrglasgefäß (14) mit mindestens vier parallel zueinander angeordneten geraden Teilstücken (30, 31, 32, 33), die durch U-förmige Abschnitte miteinander verbunden sind und dessen beiden offenen Rohrenden benachbart liegen,
**dadurch gekennzeichnet**,
daß der Innendurchmesser und die Wanddicken des Einrohrglasgefäßes (14) an allen Stellen im wesentlichen konstant sind.

2. Einrohrglasgefäß nach Anspruch 1, **dadurch gekennzeichnet**, daß der Abstand benachbarter Teilstücke des Einrohrglasgefäßes (14) 1,6 bis 3 mm, insbesondere 2 mm beträgt.

3. Einrohrglasgefäß nach Anspruch 1 oder 2, **dadurch gekennzeichnet**, daß der Innendurchmesser des Einrohrglasgefäßes (14) 5 bis 15 mm, insbesondere 12 mm beträgt.

4. Einrohrglasgefäß nach mindestens einem der Ansprüche 1 bis 3, **dadurch gekennzeichnet**, daß die Wanddicke des Einrohrglasgefäßes (14) 1 bis 2 mm beträgt.

5. Verfahren zur Herstellung mehrfach gefalteter Einrohrglasgefäße (14) nach Anspruch 1 unter Verwendung von mindestens vier parallel zueinander angeordneten, beidseitig offenen Glasrohren (30, 31, 32, 33), wobei in einem ersten Verfahrensabschnitt
a) gleichzeitig jeweils zwei im Abstand parallel stehend angeordnete Glasrohre (31, 31) an ihren unteren, sich gegenüberliegenden Rohrenden erwärmt,
b) die erwärmten Rohrenden mechanisch an ihren gegenüberstehenden Seiten verbunden und gleichzeitig an ihren Innenseiten unterhalb der dabei entstandenen Verbindungsstelle entlang einer Strecke, die im wesentlichen gleich dem Durchmesser der Glasrohre (30, 31) ist, längs aufgetrennt,
c) die entstandenen Schnittkanten der beiden Glasrohre (30, 31) durch gezielte Befeuerung von unten auseinandergetrieben werden und die Verbindungsstelle der beiden Rohrenden dabei verschweißt,
d) die im Querschnitt ovale Öffnung (13) des entstandenen ovaloffenen Gefäßes jeweils unter Einwirkung einer von unten in die Öffnung (13) gerichteten und im wesentlichen die gesamte Öffnung (13) erfassenden Befeuerung (102) zugeschmolzen, beim Zuschmelzen der ovalen Öffnung (13) die Befeuerung (102) zunehmend auf die Mitte des entstehenden U-förmigen Abschnittes fokussiert wird und
e) die entstandenen U-förmigen Abschnitte durch Blasen in einer geschlossenen Formtasche (113) ausgeformt werden, danach in einem zweiten Verfahrensabschnitt alle Glasrohre (30, 31, 32, 33) bzw. Glasrohrpaare gleichzeitig um 180° gewendet und in oben beschriebener Weise untereinander verbunden und ausgeformt werden, wobei zwei benachbarte Rohrenden offen bleiben.

6. Verfahren nach Anspruch 5, **dadurch gekennzeichnet**, daß zuerst zwei Glasrohre (30, 31) an ihrem unteren Ende zu einem U-förmigen Abschnitt verbunden, danach die unbearbeiteten Glasrohre (32, 33) sowie das entstandene Glasrohrpaar um 180° gewendet und anschließend gleichzeitig jeweils ein gerades Teilstück des zuvor hergestellten Glasrohrpaares mit einem bisher unbearbeiteten Glasrohr (32, 33) verbunden wird.

7. Verfahren nach Anspruch 5 oder 6, **dadurch gekennzeichnet**, daß das Zuschmelzen einer ovalen Öffnung (13) mittels Mehrpunktflammen (112) erfolgt.

8. Verfahren nach mindestens einem der Ansprüche 5 bis 7, **dadurch gekennzeichnet**, daß die beiden Glasrohre (32, 33), deren Enden offen bleiben, etwas länger gewählt werden als die übrigen Glasrohre (30, 31).

9. Verfahren nach Anspruch 8, **dadurch gekennzeichnet**, daß die Öffnungen der zu bearbeitenden Rohrenden jeweils auf gleiche Höhe geschoben werden.

10. Verfahren nach einem der Ansprüche 1 bis 9, **dadurch gekennzeichnet**, daß die U-förmigen Abschnitte entsprechend der Form der geschlossenen Formtaschen (113) rund, rechteckig, wellen- oder zackenförmig ausgebildet werden.

11. Vorrichtung zur Durchführung des Verfahrens nach Anspruch 5, bei der an einem getakteten Automaten (1) in gleichen Abständen Halte- und Wendezangen (2) zur Aufnahme der zu bearbeitenden Glasrohre (3) angebracht sind und entsprechend den einzelnen Positionen des getakteten Automaten (1) hintereinander ortsfest eine Zuführvorrichtung (4), eine Höhenabrichtvorrichtung (5), Vorwärmbrenner (8), eine Schneid- und Quetschvorrichtung (9), Verschmelzbrenner (10) unterschiedlicher Breite, eine Blas- und Formvorrichtung (11), eine Drehvorrichtung (6'), eine Höhenabrichtvorrichtung (5'), wiederum Vorwärmbrenner (8'), eine Schneid- und Quetschvorrichtung (9'), Verschmelzbrenner (10') unterschiedlicher Breite, eine Blas- und Formvorrichtung (11') und eine Entnahmevorrichtung (12) angeordnet sind.

12. Vorrichtung nach Anspruch 11, **dadurch gekennzeichnet**, daß der getaktete Automat (1) in der Draufsicht im wesentlichen kreisförmig ist und dementsprechend die einzelnen Bearbeitungsstationen im wesentlichen entlang eines Kreises angeordnet sind.

13. Vorrichtung nach Anspruch 11, **dadurch gekennzeichnet**, daß der getaktete Automat (1) in der Draufsicht im wesentlichen länglich ist und dementsprechend die einzelnen Bearbeitungsstationen im wesentlichen entlang einer Geraden angeordnet sind.

14. Vorrichtung nach mindestens einem der Ansprüche 11 bis 13, **dadurch gekennzeichnet**, daß der getaktete Automat (1) einen pneumatischen Antrieb besitzt.

15. Vorrichtung nach mindestens einem der Ansprüche 11 bis 14, **dadurch gekennzeichnet**, daß zwischen der Höhenabrichtvorrichtung (5) und den Vorwärmbrennern (8) eine Drehvorrichtung (6) und eine Positionsrichtvorrichtung (7) für die zu bearbeitenden Glasrohre (3) angeordnet sind.

16. Vorrichtung nach mindestens einem der Ansprüche 11 bis 15, **dadurch gekennzeichnet**, daß die Zuführvorrichtung (4) für die zu bearbeitenden Glasrohre (3) aus einer Förderkette (41) und einem pneumatisch getakteten Antrieb (42) besteht und an der Förderkette (41) Magazine (43) zur Aufnahme von mindestens vier beidseitig offenen Glasrohren (3) angeordnet sind.

17. Vorrichtung nach mindestens einem der Ansprüche 11 bis 16, **dadurch gekennzeichnet**, daß jede Schneid- und Quetschvorrichtung (9) mindestens zwei sich jeweils gegenüberstehende Schneidmesser (91, 92) aufweist.

18. Vorrichtung nach mindestens einem der Ansprüche 11 bis 17, **dadurch gekennzeichnet**, daß die Verschmelzbrenner (10) Mehrlochbrenner sind.

19. Vorrichtung nach mindestens einem der Ansprüche 11 bis 18, **dadurch gekennzeichnet**, daß jede Blas- und Formvorrichtung (11) zwei abdichtende Blasdüsen (117, 118) und mindestens eine Formtasche (113) aufweist.

20. Vorrichtung nach mindestens einem der Ansprüche 11 bis 19, **dadurch gekennzeichnet**, daß eine Blas- und Formvorrichtung (11) n/2 Formtaschen und die andere Blas- und Formvorrichtung (11') (n/2 - 1) Formtaschen aufweist, wenn n gleich der Anzahl der zu bearbeitenden Glasrohre (3) ist.

## Claims

1. Multi-folded single tube glass vessel (14) with at least four straight pieces (30,31,32,33) arranged parallel to each other and connected together by U-shaped sections with the two open tube ends lying next to each other,
characterised in that the inner diameter and wall thicknesses of the single tube glass vessel (14) are substantially constant at all points.

2. Single tube glass vessel according to claim 1 characterised in that the distance between adjoining pieces of the single tube glass vessel (14) is 1.6 to 3 mm, more particularly 2 mm.

3. Single tube glass vessel according to claims 1 or 2 characterised in that the inner diameter of the single tube glass vessel (14) is 5 to 15 mm, more particularly 12 mm.

4. Single tube glass vessel according to at least one of claims 1 to 3 characterised in that the wall thickness of the single tube glass vessel (14) is 1 to 2 mm.

5. Method for manufacturing multi-folded single tube glass vessels (14) according to claim 1 by using at least four glass tubes (30,31,32,33) which are arranged parallel to each other and are open on both sides, wherein in a first method step
a) each two spaced parallel mounted glass tubes (31,31) are heated simultaneously at their lower opposite tube ends,
b) the heated tube ends are connected mechanically at their opposing sides and at the same time are longitudinally separated on their insides underneath the resulting connecting point along a stretch substantially equal to the diameter of the glass tubes (30,31),
c) the cut edges thus formed of the two glass tubes (30,31) are driven apart from each other by targeted firing from below and the connecting point of the two tube ends is thereby welded,
d) the oval cross-section opening (13) of the resulting oval open vessel is melted closed each time through the action of firing (102) directed from below into the opening (13) and surrounding substantially the entire opening (13) and as the oval opening (13) is fused so the firing (102) is focused increasingly towards the centre of the resulting U-shaped section, and
e) the resulting U-shaped sections are moulded by blowing into a closed moulding pocket (113) and then in a second method step all the glass tubes (30,31,32,33) or pairs of glass tubes are turned simultaneously round 180° and connected together and shaped in the manner described above wherein two adjoining tube ends remain open.

6. Method according to claim 5 characterised in that at first two glass tubes (30,31) are connected at their lower end to form one U-shaped section, then the unfinished glass tubes (32,33) as well as the resulting pair of glass tubes are turned 180° and then at the same time each straight piece of the pair of glass tubes previously made is connected to one previously unfinished glass tube (32,33).

7. Method according to claim 5 or 6 characterised in that the fusing of the oval opening (13) is produced by multi-point flames (112).

8. Method according to at least one of claims 5 to 7 characterised in that the two glass tubes (32,33) whose ends remain open are selected slightly longer than the remaining glass tubes (30,31).

9. Method according to claim 8 characterised in that the openings of the tube ends being finished are each pushed at the same height.

10. Method according to one of claims 1 to 9 characterised in that the U-shaped sections are formed round, rectangular, wavy or zig-zag shaped according to the shape of the closed moulding pockets (113).

11. Apparatus for carrying out the method according to claim 5 wherein holding and turning tongs (2) for holding the glass tubes (3) to be finished are attached at regular spacing on a rhythmically operated robot machine (1) and there are mounted corresponding to the individual positions of the robot machine (1) locally fixed one behind the other a supply device (4), a height alignment device (5), a pre-heater burner (8), a cutting and squeezing device (9), smelting burners (10) of variable width, a blowing and moulding device (11), a turning device (6'), a height alignment device (5'), further preheater burners (8'), a cutting and squeezing device (9'), smelting burners (10') of variable width, a blowing and moulding device (11') and a delivery device (12).

12. Apparatus according to claim 11 characterised in that the rhythmic robot machine (1) in plan view is substantially circular and the individual finishing stations are arranged accordingly substantially along a circle.

13. Apparatus according to claim 11 characterised in that the rhythmic robot machine (1) is substantially oblong in plan view and the individual finishing stations are arranged accordingly substantially along a straight line.

14. Apparatus according to at least one of claims 11 to 13 characterised in that the rhythmic robot machine (1) has a pneumatic drive.

15. Apparatus according to at least one of claims 11 to 14 characterised in that between the height alignment device (5) and the pre-heater burners (8) there are a turning device (6) and a positioning device (7) for the glass tubes (3) which are to be finished.

16. Apparatus according to at least one of claims 11 to 15 characterised in that the supply device (4) for the glass tubes (3) to be finished consists of a conveyor chain (41) and a pneumatically rhythmically operating drive (42) and the conveyor chain (41) is fitted with magazines (43) for holding at least four glass tubes (3) which are open on both sides.

17. Apparatus according to at least one of claims 11 to 16 characterised in that each cutting and squeezing device (9) has at least two cutter blades (91,92) which are opposite one another each time.

18. Apparatus according to at least one of claims 11 to 17 characterised in that the smelting burners (10) are multi-hole burners.

19. Apparatus according to at least one of claims 11 to 18 characterised in that each blowing and moulding device (11) has two sealing blow nozzles (117,118) and at least one moulding pocket (113).

20. Apparatus according to at least one of claims 11 to 19 characterised in that one blowing and moulding device (11) has n/2 moulding pockets and the other blowing and moulding device (11') has (n/2 - 1) moulding pockets where n is equal to the number of glass tubes (3) being finished.

## Revendications

1. Récipient monotubulaire en verre à plis multiples (14) avec au moins quatre tronçons droits disposés parallèlement entre eux (30, 31, 32, 33) qui sont reliés entre eux par des sections en forme de U et dont les deux extrémités de tube ouvertes sont situées de façon contiguë,
**caractérisé en ce que**
le diamètre intérieur et les épaisseurs de paroi du récipient monotubulaire (14) sont sensiblement constants en tout endroit.

2. Récipient monotubulaire en verre selon la revendication 1, **caractérisé en ce que** la distance entre les tronçons contigus du récipient monotubulaire en verre (14) est au moins 1,6 à 3 mm, en particulier 2 mm.

3. Récipient monotubulaire en verre selon la revendication 1 ou 2, **caractérisé en ce que** le diamètre intérieur du récipient monotubulaire en verre (14) est de 5 à 15 mm, en particulier 12 mm.

4. Récipient monotubulaire en verre selon au moins l'une des revendications 1 à 3, **caractérisé en ce que** l'épaisseur de paroi du récipient monotubulaire en verre (14) est de 1 à 2 mm.

5. Procédé pour la préparation de récipient monotubulaire en verre replié en plusieurs fois (14) selon la revendication 1, en utilisant au moins quatre tubes en verre (30, 31, 32, 33) ouverts des deux côtés, disposés parallèlement entre eux, avec dans une première étape opératoire les opérations consistant à :
a) chauffer simultanément respectivement deux tubes en verre (30, 31) disposés parallèlement entre eux à une certaine distance dans leurs extrémités inférieures en regard l'une de l'autre,
b) relier les extrémités tubulaires chauffées mécaniquement sur leur côté opposé et simultanément, séparer longitudinalement sur leur côté intérieur au-dessous du point de raccordement ainsi créé sur une distance qui est sensiblement égale au diamètre des tubes de verre (30, 31),
c) séparer par le bas les bords de coupe ainsi obtenus des deux tubes de verre (30, 31) par un flambage ou jet de flammes dirigé et souder le point de raccordement des deux extrémités de tube,
d) faire fusionner l'ouverture (13) de section transversale ovale du récipient ouvert ovale ainsi obtenu respectivement en utilisant un jet de flammes (102) dirigé par le bas dans l'ouverture (13) et englobant sensiblement la totalité de l'ouverture (13), lors de la fusion de l'ouverture ovale (13) focaliser le jet de flammes (102) progressivement sur le milieu de la section en forme de U ainsi obtenue, et
e) former les sections en forme de U ainsi obtenues par soufflage en poche de moulage fermée (113), puis dans une deuxième étape opératoire, imprimer à tous les tubes de verre (30, 31, 32, 33) ou paires de tubes de verre simultanément une rotation de 180° et relier entre eux de la manière décrite ci-dessus et former de façon à ce que deux extrémités de tube contiguës demeurent ouvertes.

6. Procédé selon la revendication 5, **caractérisé en ce que** l'on raccorde d'abord deux tubes de verre (30, 31) sur leur extrémité inférieure à une section en forme de U, puis on imprime aux tubes de verre non travaillés (32, 33) ainsi qu'à la paire de tubes de verre obtenus une rotation de 180° et ensuite on raccorde simultanément respectivement un tronçon droit de la paire de tubes de verre préalablement fabriqués avec un tube de verre jusqu'à présent non usiné (32, 33).

7. Procédé selon la revendication 5 ou 6, **caractérisé en ce que** le fusionnement d'une ouverture ovale (13) s'effectue au moyen d'un flambage multipoint (112).

8. Procédé selon au moins l'une des revendications 5 à 7, **caractérisé en ce que** les deux tubes en verre (32, 33) dont les extrémités demeurent ouvertes, sont sélectionnés avec une longueur légèrement supérieure à celle des autres tubes en verre (30, 31).

9. Procédé selon la revendication 8**, caractérisé en ce que** les ouvertures des extrémités de tubes travaillés sont respectivement poussées à la même hauteur.

10. Procédé selon l'une des revendications 1 à 9, **caractérisé en ce que** les sections en forme de U sont réalisées de façon correspondante à la forme des poches de moulage fermées (113) en configuration ronde, rectangulaire, ondulée ou dentelée.

11. Dispositif pour la réalisation du procédé selon la revendication 5, dans lequel sur un automate synchronisé (1) sont disposées à distance égale des pinces de retenue et de retournement (2) pour recevoir les tubes de verre à travailler (3) et en fonction des différentes positions de l'automate synchronisé (1), et dans lequel sont agencés en succession et à demeure un dispositif d'amenée (4), un dispositif de réglage de hauteur (5), un brûleur de préchauffage (8), un dispositif de coupe et d'écrasement (9), des brûleurs de fusion (10) de différentes largeurs, un dispositif de soufflage et de moulage (11), un dispositif de rotation (6'), un dispositif de réglage de hauteur (5'), à nouveau un brûleur de préchauffage (8'), un dispositif de coupe et d'écrasement (9'), des brûleurs de fusion (10') de différentes largeurs, un dispositif de soufflage et de moulage (11') et un dispositif de prélèvement ou d'évacuation (12).

12. Dispositif selon la revendication 11, **caractérisé en ce que** l'automate synchronisé (1) est sensiblement circulaire en vue de dessus et de façon correspondante, les différents postes de travail sont sensiblement disposés en cercle.

13. Dispositif selon la revendication 11, **caractérisé en ce que** l'automate synchronisé (1) est sensiblement de forme oblongue en vue de dessus et de façon correspondante, les différents postes d'usinage sont essentiellement disposés le long d'une droite.

14. Dispositif selon au moins l'une des revendications 11 à 13**, caractérisé en ce que** l'automate synchronisé (1) possède un entraînement pneumatique.

15. Dispositif selon au moins l'une des revendications 11 à 14, **caractérisé en ce qu**'entre le dispositif de réglage de hauteur (5) et les brûleurs de préchauffage (8) sont disposés un dispositif de rotation (6) et un dispositif de réglage de position (7) pour les tubes en verre (3) à usiner.

16. Dispositif selon au moins l'une des revendications 11 à 15, **caractérisé en ce que** le dispositif d'amenée (4) pour les tubes de verre à usiner (3) consiste en un convoyeur à chaîne (41) et en un entraînement (42) synchronisé pneumatiquement et sur le convoyeur à chaîne (41) sont disposés des chargeurs (43) pour recevoir au moins quatre tubes de verre (3) ouverts des deux côtés.

17. Dispositif selon au moins l'une des revendications 11 à 16, **caractérisé en ce que** chaque dispositif de coupe et d'écrasement (9) présente au moins deux lames de coupe (91, 92) respectivement disposées en regard l'une de l'autre.

18. Dispositif selon au moins l'une des revendications 11 à 17, **caractérisé en ce que** les brûleurs de fusion (10) sont des brûleurs à plusieurs orifices.

19. Dispositif selon au moins l'une des revendications 11 à 18, **caractérisé en ce que** chaque dispositif de soufflage et de moulage (11) présente deux tuyères de soufflage étanches (117, 118) et au moins une poche de moulage (113).

20. Dispositif selon au moins l'une des revendications 11 à 19, **caractérisé en ce qu**'un dispositif de soufflage et de moulage (11) n/2 poches de coulée et l'autre dispositif de soufflage et de moulage (11') (n/2 - 1) présente des poches de coulée, lorsque n est égal au nombre de tubes de verre à usiner (3).
